Europäisches Patentamt

European Patent Office

Office européen des brevets

(19)

(11) Publication number: **0 039 522**
**B1**

(12) **EUROPEAN PATENT SPECIFICATION**

(45) Date of publication of patent specification: **30.03.83**

(21) Application number: **81200142.8**

(22) Date of filing: **06.02.81**

(51) Int. Cl.³: **C 09 K 3/32, A 01 K 1/015,
C 02 F 1/68, B 01 J 2/20**

(54) Process for the preparation of a liquid-absorbing and shock-absorbing material.

(30) Priority: **02.05.80 NL 8002562**

(43) Date of publication of application:
**11.11.81 Bulletin 81/45**

(45) Publication of the grant of the patent:
**30.03.83 Bulletin 83/13**

(84) Designated Contracting States:
**AT BE DE FR GB IT SE**

(56) References cited:
**DE - A - 2 138 037**
**FR - A - 1 070 607**
**FR - A - 2 137 462**
**GB - A - 1 513 292**
**US - A - 3 607 741**
**US - A - 3 921 581**
**US - A - 4 157 696**

(73) Proprietor: **Kok, Cornelis Jacobus Maria
Rhijnvis Feithstraat 44hs
NL-1054 VA Amsterdam (NL)**

(72) Inventor: **Kok, Cornelis Jacobus Maria
Rhijnvis Feithstraat 44hs
NL-1054 VA Amsterdam (NL)**

(74) Representative: **De Boer, Hindrik Geert Jan et al,
De Lairessestraat 131-135 Postbus 5265
NL-1007 AG Amsterdam (NL)**

Courier Press, Leamington Spa, England.

## Process for the preparation of a liquid-absorbing and shock-absorbing material

The invention relates to a process for the manufacture of liquid and shock absorbing material in the shape of substantially cylindrical pellets. Such pellets are used for instance as litter material for domestic pet's toilets and as material for the packaging of shock-sensitive objects.

US patent specification 4.157.696 describes pellets made from flyash, in which there are between the flyash particles discrete capillary channels enabling the absorbed liquid to penetrate into the interior of the pellet. These channels are formed by mixing the flyash prior to the pelletizing step with a porous or hydrophilic material such as a fibrous waste by-product from the paper industry. These pellets in dry condition give use to the formation of dust, so that they are unpleasant to handle. Moreover they have a rather poor absorbency and are therefore less suitable as animal litter to pet's toilets.

According to the invention a liquid and shock absorbing material is manufactured by dewatering an aqueous suspension of fibres consisting wholly or substantially of cellulose with an inorganic filler originating from waste water of a manufacturing process in which fibres consisting wholly or substantially of cellulose are processed by means of the wet method, which suspension, calculated on dry matter contains 60—80% w of fibres, 40—20% w of an inorganic filler and 0—10% of an admixture, to a semi-dry mass having a water content of between 40 and 80% w, subsequently squeezing the semi-dry mass through one or more narrow apertures, and subjecting the mainly cylindrical pellets thus obtained to a drying process, the operating conditions of the pelletizing and drying steps having been adjusted in such a manner, that the resulting pellets have a bulk density of 150 to 400 kg/m³ and a water content of 0,5 to 10% w. dry mass is preferably effected by means of a so-called belt filter, a nylon screening belt with such a mesh size that the shorter fibres are also retained on it.

In order to permit the semi-dry mass to be squeezed readily through one or more apertures it is necessary that this mass still contains 40 to 80% by weight of water. Preferably, the water content is between 55 and 65% by weight. If the water content is too low, compression of the mass into pellets requires an excessive squeezing pressure, as a result of which the temperature of the mass rises unduly and the surface properties are adversely affected. If, however, the water content of the mass is too high, pellets are obtained of insufficient strength which tend to crumble upon storage.

Although it is generally possible to adjust the mass to the desired water content by means of a belt filter, it may be necessary after dewatering of the suspension to insert an additional drying step, for instance with the aid of a rotary dryer, by which the mass, if emerging too wet from the belt filter, can be adjusted to the desired water content.

The semi-dry mass is as a rule first crumbled before being compressed into pellets.

Compression into pellets is done by means of devices known in the art such as a rotary pelleting press (for instance, of the type used for the compression of cattle feed) or a forming extruder. If a rotary pelleting press is applied, it is preferred to use a die with apertures having a diameter from 2 to 15 mm, in particular from 5 to 7 mm, and a length from 5 to 50 mm, in particular from 15 to 25 mm.

During pelletizing the virtually cylindrical rods emerging from the apertures break under their own weight into pieces approximately 10 to 30 mm long. It has been found that the pellets thus obtained change but little in form and dimensions upon drying.

It is possible to modify the properties of the pellets by adding one or more admixtures either to the original suspension or to the semi-dry mass. If water-insoluble admixtures are used, these are preferably added to the suspension before the dewatering step. Water-soluble admixtures are preferably added to the semi-dry mass after dewatering.

Depending on the intended uses of the pellets formed, suitable admixtures are, for example, dyes, odorants and biologically active compounds such as insecticides, fungicides and bactericides.

To obtain pellets having a good firmness and dimensional stability, it is also desirable to incorporate up to 10% by weight of another organic material such as starch or glues.

Drying of the pellets formed is preferably effected making use of a stream of hot air with a temperature between 100 and 150°C, in particular between 120 and 130°C. The device used for the drying step may be known in the art such as a rotary dryer, a conveyor dryer or a cascade dryer.

The drying process is conducted such that the pellets finally have a water content between 0,5 and 10% by weight, preferably between 5 and 8% by weight.

The bulk density of the pellets formed can be influenced by adjustment of the various materials involved in the process, notably the composition of the suspension (weight ratio of fibrous materials to filler), of the water content of the semi-dry mass, of the pelletizing conditions (temperature, pressure and dimensions of the apertures) and the drying conditions (temperatures). To obtain pellets with good liquid-absorbing and shock-absorbing properties, these conditions are adjusted such that the bulk density of the pellets is between 150 and 400 kg/m³, in particular between 200 and 350 kg/m³.

The pellets produced by means of the process according to the invention can be applied to a range of uses.

The pellets are capable of absorbing both oil and water and are therefore suitable for the removal of oil from the surface water, as litter material for domestic pets' excretion boxes (cats' boxes) as well as for poultry houses and stables.

As the rate of absorption is greater for oil than for water, preferential absorption of oil takes place when the pellets are scattered over stretches of water which have been contaminated with oil.

Because of the presence of the inorganic filler, the density of pellets saturated with oil and water is generally greater than 1, so that they sink to the bottom. The pellets are capable of absorbing 80 to 150% of their own weight in oil or 200 to 300% of their own weight in water. If, however, the density of pellets saturated with oil is smaller than 1, they obviously remain afloat on the water. In that case they can easily be scooped up from the water and subsequently burned.

The pellets are also very suitable for use as shockabsorbing material for packaging and as a material for cleaning-up dirt from floors. In comparison with polystyrene beads customarily used for this purpose they have the advantage of absorbing liquid as well, an asset which the polystyrene beads do not possess.

Example

A suspension of fibrous materials and filler, derived from the manufacture of newsprint, of which the dry substance comprises

56% by weight of a mixture of ground wood and thermomechanical pulp,
14% by weight of sulphate pulp prepared from pine,
30% by weight of kaolin

is dried over a belt filter in such a fashion that different batches are adjusted to different water contents.

The different batches are processed with the aid of a laboratory meat mincer and a rotary pelleting press into pellets which are further dried with warm air to a water content of approx. 5% by weight. The apertures in the die of the pelletizing press have a diameter of 5 mm and a length of 17 mm.

The properties of the pellets obtained are listed in the following table.

| Batch No. | 1 | 2 | 3 | 4 | 5 | 6 |
|---|---|---|---|---|---|---|
| Water content of semi-dry mass before pelletizing (% by weight) | 68 | 59 | 70 | 59 | 52 | 43 |
| Processed with | mincer | mincer | pelletizer | pelletizer | pelletizer | pelletizer |
| Moisture content of pellets after drying (% by weight) | 5 | 5 | 5 | 5 | 5 | 5 |
| Bulk density (kg/m$^3$) | 200 | 230 | 250 | 250 | 290 | 340 |
| Maximum water uptake (% by weight) | 220 | 240 | 120 | 120 | 90 | 60 |
| Maximum oil uptake (% by weight) | 150 | 180 | 100 | 100 | 80 | 70 |
| Density of saturated pellets | >1 | >1 | >1 | >1 | >1 | >1 |
| Dimensional stability in water | moderate | moderate | good | good | good | good |

0039522

## Claims

1. A process for the manufacture of liquid and shock absorbing material, in which a suspension of fibres consisting wholly or substantially of cellulose is dewatered to a semi-dry mass, which mass is subsequently pelletized, after which the pellets thus obtained are subjected to a drying process, characterized in that the suspension is the waste water from a manufacturing process in which fibres, consisting wholly or substantially of cellulose are processed by the wet method, which suspension, calculated on dry matter contains 60—80% w of fibres, 40—20% w of inorganic filler and 0—10% w of an admixture, the pelletizing process being carried out by squeezing the semi-dry mass with a water content of between 40 and 80% w through one or more narrow apertures, the operating conditions of the pelletizing process and the drying process having been adjusted in such a manner, that the resulting pellets have a bulk density of 150 to 400 kg/m³ and a water content of 0,5—10% w.

2. A process according to claim 1, characterized in that the suspension is dewatered to a point where the semi-dry mass still contains between 55 and 65% of water.

3. A process according to claim 1—2, characterized in that the admixture to modify the properties of the formed pellets is starch, glue, a dye, an odorant or a biologically active compound such as an insecticide, a fungicide or a batericide.

4. A process according to claim 1—3 characterized in that the pellets formed are dried to a water content of 5—8% by weight, by means of a stream of hot air with a temperature between 100 and 150°C.

5. A process according to claim 1—4, characterized in that the variables of the individual steps are adjusted such that the bulk density of the pellets is between 200 and 350 kg/m³.

6. Formed pellets with liquid-absorbing and shock-absorbing properties, as obtained according to the process of any one of claims 1—5.

7. Application of the formed pellets according to claim 6 for the removal of oil spills from surface water.

8. Application of the formed pellets according to claim 6 as absorbent for floors and in packaging.

9. Application of the formed pellets according to claim 6 as litter material for domestic pets excretion boxes and for stables.

## Patentansprüche

1. Verfahren zur Herstellung eines flüssigkeitsabsorbierenden und stossdämpfenden Materials, wobei eine Suspension von ganz oder hauptsächlich aus Zellulose bestehenden Fasern zu einer halbtrockenen Masse entwässert und diese Masse anschliessend pelletisiert wird, worauf die so erhaltenen Pillen einem Trocknungsverfahren unterzogen werden, dadurch gekennzeichnet, dass die Suspension aus dem Abwasser eines Herstellungsverfahrens besteht, wobei ganz oder hauptsächlich aus Zellulose gebildete Fasern durch das Flüssigverfahren verarbeitet worden sind, und dass die Suspension 60—80 Gew.% Fasern, 40—20 Gew.% eines anorganischen Fullstoffes und 0—10 Gew.-% einer Beimischung enthält (errechnet auf Basis des Gehalts an Feststoffen), wobei das Pelletisierungsverfahren erfolgt durch Pressung der halbtrockenen Masse mit einem Wassergehalt zwischen 40 und 80 Gew.-% durch eine oder mehrere Schmalen Öffnungen und die Betriebsbedienungen des Pelletisierungsverfahrens sowie des Trocknungsverfahrens derart eingestellt sind, dass die so erhaltenen Pillen ein Schüttgewicht von 150 bis 400 kg/m³ und einem Wassergehalt von 0,5 bis 10 Gew.-% aufweisen.

2. Verfahren nach Anspruch 1, dadurch gekennzeichnet, dass die Suspension zu einem derartigen Ausmass entwässert wird, dass die halbtrockene Masse noch einen Wassergehalt von 55 bis 65 hat.

3. Verfahren nach den Ansprüchen 1—2, dadurch gekennzeichnet, dass Stärke, Leim, ein Farbstoff, ein Riechstoff oder eine biologisch aktive Verbindung wie ein Insektizid, ein Fungizid oder ein Bakterizid als Beimischung zur Modifizierung der Eigenschaften der gebildeten Pillen verwendet wird.

4. Verfahren nach den Ansprüchen 1 bis 3, dadurch gekennzeichnet, dass die geformten Pillen mit Hilfe eines Heissluftstroms mit einer Temperatur zwischen 100 und 150°C zu einem Wassergehalt von 5 bis 8 Gew.-% getrocknet werden.

5. Verfahren nach den Ansprüchen 1 bis 4, dadurch gekennzeichnet, dass die Variablen der einzelnen Stufen derart eingestellt werden, dass die Pillen ein Schüttgewicht von 200 bis 350 kg/m³ aufweisen.

6. Geformte Pillen mit flüssigkeitsabsorbierenden und stossdämpfenden Eigenschaften nach dem Verfahren gemäss den Ansprüchen 1 bis 5.

7. Verwendung der geformten Pillen nach Anspruch 6 für die Entfernung verschütteten Öls von Gewässern.

8. Verwendung der geformten Pillen nach Anspruch 6 als Absorbens für Fussboden und in Verpackungen.

9. Verwendung der geformten Pillen nach Anspruch 6 als Streugut für Haustierklosette und Ställe.

## Revendications

1. Procédé pour la fabrication d'une matière ayant la capacité d'absorber des liquides et d'amortir des secousses, dans lequel procédé une suspension de fibres se composant quasi-entièrement de cellulose est déshydratée jusqu'à une masse mi-sèche, laquelle masse est granulée ensuite, après quoi les granules ainsi obtenues sont soumises à un procédé de séchage, charactérisé en ce que la suspension est de l'eau résiduaire d'un procédé de fabrication dans lequel des fibres se composant quasi entièrement de cellulose sont traitées par la méthode mouillée, laquelle suspension, calculée sur matière sèche contient 60—80% poids de fibres, 20—40% p. d'un filler mineral et 0—10% p. d'une adjonction, le procédé de granulation étant executé en pressant la masse mi-sèche, contenant entre 40 et 80% p. de l'eau, à travers d'un ou plusiers trous étroits, les régimes du procédé de granulation et du procédé de séchage étant mis au point de la sorte que les granules obtenues aient une densité de masse de 150 à 400 kg/m³ et un teneur en eau de 0.5—10% p.

2. Procédé selon revendication 1, caractérisé en ce que la suspension est déshydratée jusqu'à ce que la masse misèche contient encore entre 55 et 65% d'eau.

3. Procédé selon les revendications 1—2, caractérisé en ce que l'adjonction pour modifier les propriétés des granules formées est amidon, colle, colorant, odorant ou un composé bio-actif comme par example un insecticide, un fungicide ou un bactericide.

4. Procédé les revendications 1—3, caractérisé en ce que les granules formées sont séchées jusqu'à un teneur en eau de 5—8% poids, au moyen d'un courant d'air chaud d'une température entre 100 et 150°C.

5. Procédé selon les revendications 1—4, charactérisé en ce que les conditions des phases individuelles sont réglées de la sorte que la densité de masse des granules est entre 200 et 350 kg/m³.

6. Granules formées ayant la capacité d'absorber des liquides et d'amortir des secousses, obtenues par le procédé selon chacun des revendications 1—5.

7. Utilisation des granules formées selon la revendication 6 pour l'enlèvement d'huile repandue de l'eau à ciel ouvert.

8. Utilisation des granules formées selon la revendication 6 comme absorbant sur les sols et comme amortisseur d'emballage.

9. Utilisation des granules formées selon la revendication 6 comme absorbant dans les toilettes des animaux domestiques et dans les étables.